# EUROPÄISCHE PATENTSCHRIFT

(11) **EP 2 510 794 B1**
(45) Veröffentlichungstag und Bekanntmachung des Hinweises auf die Patenterteilung: **13.07.2016**
(21) Anmeldenummer: 12002612.5
(22) Anmeldetag: 13.04.2012
(51) Int. Cl.: A22C 17/00, B26D 5/00

(54) **Produktionsanlage zum Portionieren von Lebensmitteln**
Production assembly for portioning food
Installation de production pour la mise en portion de produits alimentaires

(30) Priorität: 14.04.2011 DE 102011017101
(43) Veröffentlichungstag der Anmeldung: 17.10.2012
(73) Patentinhaber: Weber Maschinenbau GmbH Breidenbach, 35236 Breidenbach (DE)
(72) Erfinder: Eckhardt, Christoph, Dipl.-Ing., 35236 Breidenbach (DE)
(74) Vertreter: Grünecker Patent- und Rechtsanwälte PartG mbB

(56) Entgegenhaltungen:
- WO-A1-2008/071669
- WO-A1-2009/112130
- DE-U1-202005 021 692
- JP-A- H10 118 986
- US-A1- 2004 154 445

## Beschreibung

Die vorliegende Erfindung stellt eine Produktionsanlage zur Verfügung, die Lebensmittel portionieren kann.

Produktionsanlagen zum Portionieren von Lebensmittelprodukten müssen immer komplexere Aufgaben erfüllen. Neben der Notwendigkeit, dass eine Produktionsanlage verschiedene Arten von Lebensmitteln, wie beispielsweise Wurst oder Käse unterschiedlichster Formen, portionieren können soll, werden die Anforderungen an die ausgegebenen Portionen immer vielfältiger. Gängige Produktionsanlagen zum Portionieren von Lebensmitteln umfassen dabei meist eine Schneidevorrichtung, auch Slicer genannt, mit einer nachgeordneten Verpackungseinrichtung. Des Weiteren können solche Produktionsanlagen Pellmaschinen, Beladepuffer, Einleger, Pick-and-Place-Roboter, Mehrlagenpuffer oder weitere Maschinen umfassen.

Um ein gewünschtes Endprodukt zu erzielen, müssen dabei für jede Maschine Produkt- und Rezeptparameter eingestellt werden. Mit der Menge der eingesetzten Maschinen in einer solchen Produktionsanlage erhöht sich auch die Komplexität dieser Aufgabe. So muss beispielsweise, wenn ein Parameter der Schneidemaschine verändert wird, auch Parameter der Verpackungsmaschine entsprechend angepasst werden, damit die Maschinen optimal zusammenarbeiten. Dies ist mitunter eine komplexe und zeitraubende Aufgabe.

DE 20 2005 021692 U1 betrifft eine Vorrichtung zum Aufschneiden von Lebensmittelprodukten mit einer Produktzuführung, die ein aufzuschneidendes Produkt einer Schneideebene zuführt, in der sich ein Schneidemesser insbesondere umlaufend bewegt. Durch eine realistische Darstellung von Produktscheiben wird auch einem Laien ein anschauliches und intuitiv zu benutzendes Werkzeug für ein Portionsdesign an die Hand gegeben, bei dem der Benutzer das Ergebnis-nämlich die gewünschte Portionsform - schon im wahrsten Sinne des Worte "vor Augen hat", bevor auch nur ein Messerschnitt ausgeführt wurde. Das erstellte Format, also die "virtuelle" Portion wird automatisch in eine entsprechende Ansteuerung eines Ablagetisches umgesetzt. Eine abstraktmathematische Maschinenprogrammierung ist nicht erforderlich. Das Erstellen eines gewünschten Formats erfolgt durch Verschieben dargestellter Produktscheiben auf einer Anzeigeeinrichtung. Eine Auswerteeinrichtung berücksichtigt bei der Berechnung von Steuerbefehlen sowohl Lageposition der Produktscheiben auf einer Ablagefläche als auch Stapelpositionen der Produktscheiben innerhalb von Stapeln aus einander zumindest teilweise überlappenden Produktscheiben.

WO 2009/112130 A1 betrifft eine Vorrichtung zur Steuerung einer Anlage und ein Verfahren zur Einrichtung und Bedienung der Steuerung einer Anlage. Die Programmierung einer Steuerungssoftware geschieht mithilfe einer Visualisierungseinheit. Hierzu hat die Visualisierungseinheit ein berührempfindliches Display, auf dem grafische Elemente aus einer Bibliothek darstellbar sind. Hierzu sind die grafischen Elemente aus der Bibliothek menügeführt oder per Drag-and-Drop über das berührempfindliche Display auswählbar. Die grafischen Elemente werden nach Auswahl auf dem Display als parametrierte grafische Elemente angezeigt, wobei die relative Anordnung der parametrierten grafischen Elemente die Reihenfolge und logische bzw. funktionale Zusammengehörigkeit darstellt und wobei die Anzeige Schaltflächen zur Veränderungen der Parameterwerte der parametrierten grafischen Elemente an diesen Elementen bereitstellt. Durch die Auswahl eines grafischen Elements aus der Bibliothek wird eine Verknüpfung zu der Steuerungssoftware instantan erzeugt, die den Aufruf des entsprechenden Funktionsmoduls bei der Ausführung der Steuerungssoftware mit dem zu dem parametrierten grafischen Element festgelegten Parametersatz bewirkt. Eine Änderung des Parametersatzes an dem parametrierten grafischen Element bewirkt eine dementsprechende Änderung des betreffenden parametrierten Funktionsmoduls.

US 2004/154445 A1 betrifft eine Vorrichtung zum Aufschneiden eines Produkts. In einem Beispiel findet ein Einkäufer ein gekühltes Anzeigefach vor, das eine geordnete Anordnung von Positionen umfasst. Jede Position in der Anordnung enthält ein aufschneidbares Produkt, welches identifizierbar und/oder beschriftet ist. In unmittelbarer Nähe zu der Anzeige ist ein großer Touchscreen, welcher als Dateneingabevorrichtung dient. Der Einkäufer wird darauf aufgefordert, eine Bestellung aufzugeben, die ein Produkt entweder mittels eines Namens oder mittels Angabe eines Platzes in der Anordnung beschreibt.

WO 2008/071669 A1 betrifft ein Verfahren zur Steuerung einer oder mehrerer Maschinen mit repetierbaren Abläufen über eine Maschinensteuerung sowie eine Bedieneinheit, ausgebildet als Mensch-Maschine-Interface, wobei die Produktionsparametrierung und die Konfiguration des Produktionsablaufes mittels Tasten, mit Blick auf die Bedieneinheit bzw. einen Hauptbildschirm und die operativen Steuerangaben mittels Maschinenbewegungstasten, mit Blick auf die Maschine, eingegeben und verändert werden können. Bei Programmiereingaben an Bildschirmen, bei denen das Auge immer auf dem Bildschirm fixiert ist, geschieht die Eingabe durch ein Pointing-Device, mit welchem eine Marke auf dem Bildschirm verschoben wird, deren Positionierung die Eingabe bestimmt. Das Feedback geschieht optisch am Bildschirm. Bei Spritzgießmaschinen betrifft dies alle Programmierarbeiten, die Navigation und die Systemeinstellungen. Bei Programmiereingaben am Bildschirm spricht man von Bedienen am Sichtfeld. Ein Touchscreen ist über die Bildfläche manipulierbar. Er ist ein bedienbarer Bildschirm.

JP H10 11 8986 A betrifft eine Wurstschneidemaschine.

Demnach liegt die Aufgabe der vorliegenden Erfindung darin, Vorrichtungen des Standes der Technik flexibler zu gestalten.

Diese Aufgabe wird erfindungsgemäß durch den Gegenstand der unabhängigen Patentansprüche gelöst. Bevorzugte Ausführungsformen werden durch die abhängigen Patentansprüche definiert.

Erfindungsgemäß umfasst eine Produktionsanlage zum Portionieren von Lebensmitteln mindestens eine Schneidemaschine für Lebensmittel, eine Anzeigevorrichtung, eine Auswahleinheit und eine Steuerbefehleinheit. Die Anzeigevorrichtung umfasst dabei einen ersten Anzeigebereich und einen zweiten Anzeigebereich, wobei die Anzeigevorrichtung eingerichtet ist, im ersten Anzeigebereich mögliche Ausgabeprodukte der Schneidemaschine darzustellen. Mittels der Auswahleinheit kann ein Benutzer ein Ausgabeprodukt aus möglichen Ausgabeprodukten der Schneidemaschine, die im ersten Anzeigebereich dargestellt sind, auswählen. Die Auswahleinheit ist des Weiteren eingerichtet, ein vom Benutzer ausgewähltes Ausgabeprodukt des ersten Anzeigebereichs dem zweiten Anzeigebereich zuzuordnen. Schließlich ist die Steuerbefehleinheit eingerichtet, ein Ausgabeprodukt der Schneidemaschine, das dem zweiten Anzeigebereich zugeordnet ist, in Steuerbefehle für die Schneidemaschine umzuwandeln.

Des Weiteren stellt die vorliegende Erfindung ein computerlesbares Speichermedium zur Verfügung, das computerausführbare Instruktionen enthält, die, wenn von einem Computer ausgeführt, den Computer veranlassen, ein Verfahren zum Steuern einer Produktionsanlage zum Portionieren von Lebensmitteln auszuführen. Die Produktionsanlage umfasst dabei mindestens eine Schneidemaschine. Dabei stellt das Verfahren zunächst mögliche Ausgabeprodukte der Schneidemaschine in einem ersten Anzeigebereich einer Anzeigevorrichtung dar. Wird eine Auswahl eines Ausgabeprodukts aus den möglichen Ausgabeprodukten der Schneidemaschine durch einen Benutzer empfangen, so ordnet das Verfahren das ausgewählte Ausgabeprodukt dem zweiten Anzeigebereich der Anzeigevorrichtung zu. Schließlich wird das dem zweiten Anzeigebereich zugeordnete Ausgabeprodukt in Steuerbefehle für die Schneidemaschine umgewandelt.

Schließlich stellt die vorliegende Erfindung eine Vorrichtung zum Steuern einer Produktionsanlage, die eine erste und eine zweite Maschine umfasst, zur Verfügung. Dabei umfasst die Vorrichtung zum Steuern eine Anzeigevorrichtung, eine Auswahleinheit und eine Steuerbefehleinheit. Auf der Anzeigevorrichtung sind mögliche Ausgabeprodukte der ersten und der zweiten Maschine dargestellt. Mittels der Auswahleinheit kann der Benutzer ein Ausgabeprodukt, das auf der Anzeigevorrichtung dargestellt ist, auswählen. Schließlich ist die Steuerbefehleinheit eingerichtet, ein ausgewähltes Ausgabeprodukt der ersten Maschine in Steuerbefehle für die erste und die zweite Maschine umzuwandeln.

Bevorzugte Ausgestaltungen der vorliegenden Erfindung werden im Weiteren mit Bezug auf folgende Zeichnungsfiguren im Detail beschrieben. Hierbei zeigen die Zeichnungen im einzelnen:

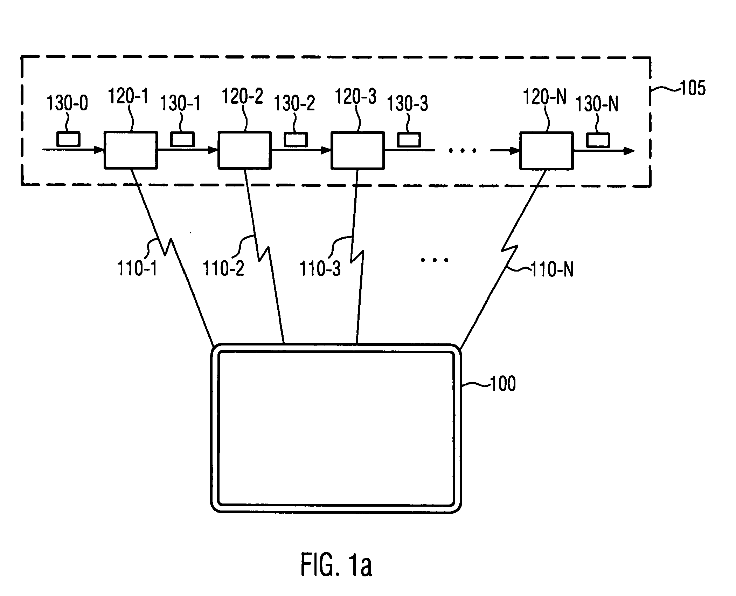

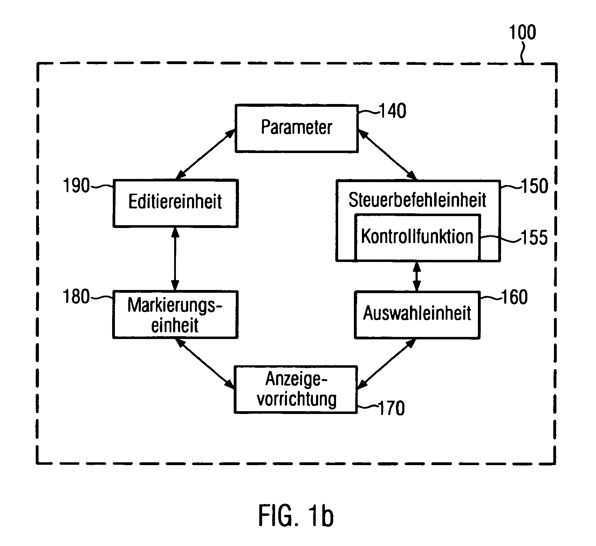

Figur 1 a: eine schematische Darstellung einer erfindungsgemäßen Produktionsanlage zum Portionieren von Lebensmitteln nach einer Ausführungsform der vorliegenden Erfindung;
Figur 1 b: eine schematische Darstellung einer erfindungsgemäßen Vorrichtung zum Steuern einer Produktionsanlage zum Portionieren von Lebensmitteln nach einer Ausführungsform der Erfindung;
Figur 2: eine schematische Darstellung einer Anzeigevorrichtung, die zum Steuern der Produktionsanlage zum Portionieren von Lebensmitteln nach einer Ausführungsform der Erfindung benutzt wird;
Figur 3: eine schematische Darstellung einer Anzeigevorrichtung, die zum Steuern der Produktionsanlage zum Portionieren von Lebensmitteln nach einer Ausführungsform der vorliegenden Erfindung benutzt wird;
Figur 4: eine schematische Darstellung einer Anzeigevorrichtung, die zum Steuern der Produktionsanlage zum Portionieren von Lebensmitteln nach einer Ausführungsform der vorliegenden Erfindung benutzt wird; und
Figur 5: ein Flussdiagramm zum Steuern der Produktionsanlage zum Portionieren von Lebensmitteln nach einer Ausführungsform der vorliegenden Erfindung.

Figur 1 a zeigt eine schematische Darstellung einer Produktionsanlage zum Portionieren von Lebensmitteln. Wie aus Figur 1 a ersichtlich, umfasst eine Produktionsanlage 105 zum Portionieren von Lebensmitteln, wie Wurst oder Käse unterschiedlichster Ausgangsformen, eine oder mehrere Maschinen (oder Komponenten), 120-1, 120-2, 120-3, ..., 120-N. Dabei wird ein Ausgangsprodukt 130-0 in ein Endprodukt 130-N umgewandelt. Das Ausgabeprodukt einer Maschine kann dabei das Eingabeprodukt einer nächsten Maschine sein. So ist beispielsweise das Ausgabeprodukt 130-1 der Maschine 120-1 der Figur 1a gleichzeitig das Eingabeprodukt 130-1 der Maschine 120-2. Die Maschine 120-2 hat als Ausgabeprodukt das Produkt 130-2, welches als Eingabeprodukt der Maschine 120-3 dient. Die letzte Maschine oder Komponente der Produktionsvorrichtung 105, 120-N, hat schließlich als Ausgabeprodukt 130-N.

In Ausführungsformen der Erfindung umfasst die Produktionsanlage 105 mindestens eine Schneidemaschine für Lebensmittel oder mindestens eine Schneidemaschine für Lebensmittel und eine weitere Maschine.

In Ausführungsformen der vorliegenden Erfindung umfasst die Produktionsanlage 105 zum Portionieren von Lebensmitteln beispielsweise Beladepuffer, Mehrlagenpuffer, Pellmaschinen, Slicer, Einleger, Pick-and-Place-Roboter, Food-Roboter und Verpackungsmaschinen. So entspricht in einem Beispiel die Maschine 120-1 einem Beladepuffer, die Maschine 120-2 einer Pellmaschine, die Maschine 120-3 einer Schneidemaschine und die Maschine 120-N einer Verpackungsmaschine. In diesem Beispiel ist das Eingabeprodukt 130-0 eine Wurst, die in den Beladepuffer 120-1 eingelegt wird. Der Beladepuffer stellt sein Ausgabeprodukt 130-1 der Pellmaschine 120-2 zur Verfügung. Die Pellmaschine hat als Ausgabeprodukt 130-2 die entpellte Wurst, welche der Schneidemaschine 120-3 zur Verfügung gestellt wird. Die Schneidemaschine 120-3 produziert aus der entpellten Wurst eine Portion 130-3, die schließlich von der Verpackungsmaschine 120-N verpackt wird. Das Endprodukt 130-N ist hier die verpackte, aufgeschnittene Wurst.

Gesteuert wird die Produktionsanlage 105 mittels der Steuervorrichtung 100, die entweder Teil der Produktionsanlage 105 ist oder außerhalb der Produktionsanlage 105 angesiedelt ist. Die Steuervorrichtung 100 ist dabei in Ausführungsformen der Erfindung eine programmierbare Vorrichtung, wie beispielsweise ein Computer, mit Eingabe und Ausgabevorrichtungen. Die Steuervorrichtung 100 ist im Detail in Figur 1b dargestellt und kann beispielsweise ein Tablet-Computer oder ein Smartphone sein, der/das über eine berührungsempfindliche Touchscreen-Oberfläche verfügt. Ein Tablet-Computer zeichnet sich hierbei dadurch aus, dass die Elektronik des Computers in der Anzeigevorrichtung integriert ist. In Ausführungsformen kann die Steuervorrichtung auch eine Touchscreen-Anzeige umfassen, die als Eingabe- und Ausgabevorrichtung dient, während die Elektronik des Computers nicht in der Anzeigevorrichtung integriert ist. In anderen Ausführungsformen ist die Steuervorrichtung ein PC oder Notebook, bei dem das Eingabegerät beispielsweise ein Keyboard und/oder eine Maus und das Ausgabegerät ein Bildschirm ist, der entweder eine berührungsempfindliche Oberfläche aufweist oder nicht.

Die Steuervorrichtung 100 steht, wie in Figur 1 a schematisch dargestellt, in Verbindung mit der Produktionsanlage 105. Dabei kann die Steuervorrichtung 100 über die Kommunikationswege 110-1, 110-2, 110-3, ..., 110-N mit jeder Maschine 120-1, 120-2, 120-3, ..., 120-N kommunizieren. Die Kommunikationswege 110-1, 110-2, 110-3, ..., 110-N können dabei drahtgebunden oder drahtlos sein.

Figur 1b zeigt eine schematische Darstellung einer Steuervorrichtung 100. Hierbei wurde auf eine Darstellung von erfindungsunwesentlichen Elementen, wie Prozessoren oder Speichern, verzichtet. Die Steuervorrichtung 100 umfasst eine Anzeigevorrichtung 170, die in Ausführungsformen als Touchscreen ausgebildet ist. Daneben umfasst die Steuervorrichtung 100 eine Auswahleinheit 160 und eine Steuerbefehleinheit 150. In einigen Ausführungsformen umfasst die Steuervorrichtung 100 noch eine Markierungseinheit 180, eine Editiereinheit 190 und einen Speicher 140, der Rezept- und Produktparameter der Maschinen 120-1, 120-2, 120-3, ..., 120-N der Produktionsanlage 105 gespeichert hat. Daneben umfasst die Steuerbefehleinheit 150 in manchen Ausführungsformen eine Kontrollfunktion 155. Die Einheiten 150, 160, 180 und 190 können hierbei als Software oder Hardware implementiert sein.

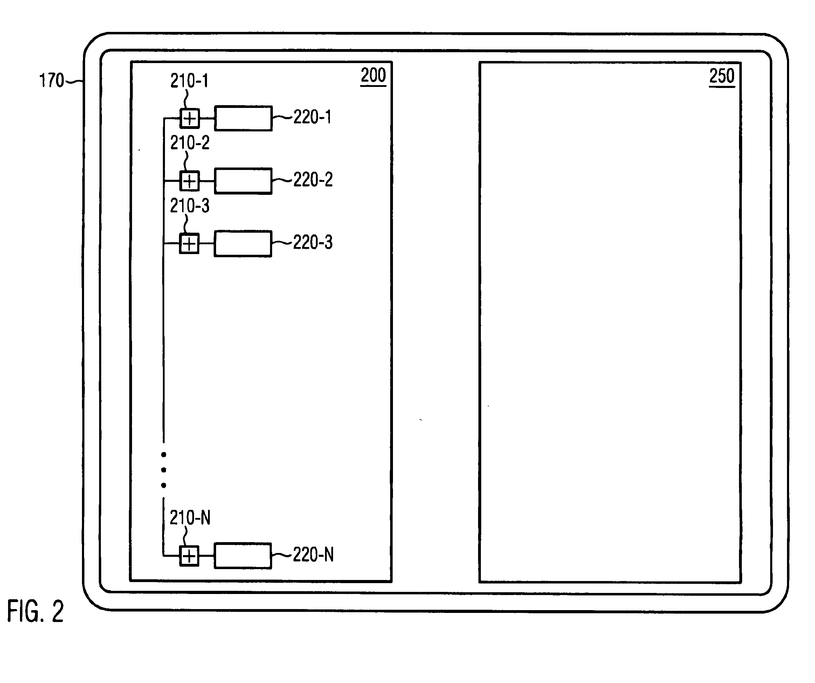

Die Funktionsweise der Steuervorrichtung 100 mit den Einheiten 140, 150, 155, 160, 170, 180 und 190 wird nun unter Bezugnahme auf Figuren 2 bis 5 beschrieben. Hierbei steuert die Steuervorrichtung 100 die Produktionsanlage 105 aus Figur 1 a. Die Steuervorrichtung 100 ist aber nicht beschränkt zum Steuern von Produktionsanlagen zum Portionieren von Lebensmitteln, sondern kann prinzipiell zum Steuern von jeglicher Art von Produktionsanlage oder Maschinenstraße eingesetzt werden.

Figur 2 zeigt eine erste Ansicht der Anzeigevorrichtung 170 der Steuervorrichtung 100, die die Produktionsanlage 105 steuert. Dabei besitzt die Anzeigevorrichtung einen ersten Anzeigebereich 200 und einen zweiten Anzeigebereich 250. Im ersten Anzeigebereich 200 werden Darstellungen 220-1, 220-2, 220-3, ..., 220-N dargestellt. Jede Darstellung 220-1, 220-2, 220-3, ..., 220-N repräsentiert dabei eine Maschine 120-1, 120-2, 120-3, ..., 120-N der Produktionsanlage 105 auf eindeutige Weise. Beispielsweise repräsentiert Darstellung 220-1 die Maschine 120-1, die Darstellung 220-2 die Maschine 120-2, die Darstellung 220-3 die Maschine 120-3 und die Darstellung 220-N die Maschine 120-N. In Ausführungsformen der vorliegenden Erfindung sind die Darstellungen 220-1, 220-2, 220-3, ..., 220-N grafisch und/oder beschreibend. So wird beispielsweise ein realistisches Bild oder eine Animation der darzustellenden Maschine angezeigt.

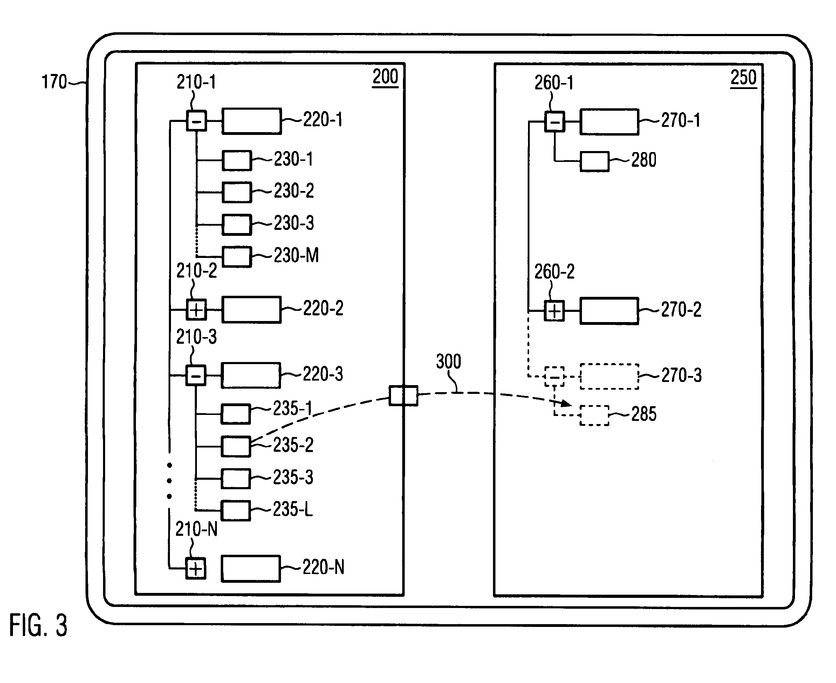

In manchen Ausführungsformen der Erfindung sind die Darstellungen 220-1, 220-2, 220-3, ..., 220-N im ersten Anzeigebereich 200 als Baumstruktur organisiert. Die Baumstruktur repräsentiert hierbei die Konfiguration der Produktionsanlage 105, die gesteuert wird. Jeder Darstellung 220-1, 220-2, 220-3, ..., 220-N ist ein Symbol 210-1, 210-2, 210-3, ..., 210-N zugeordnet, das Zugriff auf mögliche Ausgabeprodukte der jeweiligen Maschine erlaubt, die von der zugeordneten Darstellung repräsentiert wird. Der Zugriff kann hierbei als Pulldown-Menü realisiert sein. Wählt ein Benutzer beispielsweise das Symbol 210-1 mittels Berührung auf einem Touchscreen oder mittels Mausklick aus, so werden als Pulldown-Menü, wie in Figur 3 ersichtlich, mögliche Ausgabeprodukte 230-1, 230-2, 230-3, ..., 230-M der Maschine 120-1, die von der Darstellung 220-1 repräsentiert wird, eindeutig dargestellt. Auch hier können die Darstellungen 230-1, 230-2, 230-3, ..., 230-M, bildhafte Darstellungen der Ausgabeprodukte der Maschine, Animationen und/oder Beschreibungen sein. In Figur 3 werden außerdem die möglichen Ausgabeprodukte der Maschine 120-3, die von der Darstellung 220-3 repräsentiert wird, angezeigt. Die Maschine 120-3 hat dabei in diesem Beispiel mögliche Ausgabeprodukte 235-1, 235-2, 235-3, ..., 235-L.

Wie oben erwähnt werden im Anzeigebereich 200 Darstellungen, die Maschinen der Produktionsanlage 105 repräsentieren, dargestellt. Außerdem wird einem Benutzer mittels der Symbole 210-1, 210-2, 210-3, ..., 210-N Zugriff auf mögliche Ausgabeprodukte der Maschinen erlaubt. In manchen Ausführungsformen werden hingegen im Anzeigebereich 200 nur die möglichen Ausgabeprodukte der Maschinen der Produktionsanlage 105 dargestellt. In manchen Ausführungsformen werden die Ausgabeprodukte einer Maschine dargestellt, wenn ein Benutzer eine Darstellung 220-1, 220-2, 220-3, ..., 220-N auswählt.

Für alle Ausführungsformen stellt die Steuervorrichtung 100 einem Benutzer eine Auswahleinheit 160 zur Verfügung, mittels der der Benutzer ein mögliches Ausgabeprodukt einer Maschine auswählen kann. In Ausführungsformen, in denen die Anzeigevorrichtung 170 der Steuervorrichtung 100 als Touchscreen realisiert ist, kann ein Benutzer beispielsweise mittels längerer Berührung eines möglichen Ausgabeprodukts auf dem Touchscreen, mittels doppelter Berührung eines möglichen Ausgabeprodukts auf dem Touchscreen innerhalb eines vordefinierten Zeitraums, mittels Verschieben eines möglichen Ausgabeprodukts auf dem Touchscreen durch Drag & Drop in den zweiten Anzeigebereicht 250 oder mittels anderer Verfahren ein mögliches Ausgabeprodukt auswählen. In Ausführungsformen, in denen das Eingabegerät eine Maus oder ähnliches ist, kann der Benutzer ein Ausgabeprodukt beispielsweise mittels eines Klicks, mittels eines Doppelklicks oder mittels Verschieben durch Drag & Drop in den zweiten Anzeigebereich 250 auswählen. In anderen Ausführungsformen kann der Benutzer auf andere Art und Weise ein mögliches Ausgabeprodukt des ersten Anzeigebereichs 200 auswählen.

Mögliche Ausgabeprodukte, die der Benutzer im ersten Anzeigebereich 200 auswählt, werden dem zweiten Anzeigebereich zugeordnet. Diese Zuordnung führt in Ausführungsformen die Auswahleinheit 160 durch. In Ausführungsformen der vorliegenden Erfindung werden dem zweiten Anzeigebereich 250 zugeordnete Ausgabeprodukte im zweiten Anzeigebereich 250 der Anzeigevorrichtung dargestellt.

Figur 3 zeigt die Anzeige einer Anzeigevorrichtung 170, bei der mögliche Ausgabeprodukte des ersten Anzeigebereichs 200 ausgewählt worden sind. Wie erwähnt, veranlasst eine Auswahl eines möglichen Ausgabeprodukts des ersten Anzeigebereichs 200 eine Zuordnung des ausgewählten möglichen Ausgabeprodukts zum zweiten Anzeigebereich 250. In manchen Ausführungsformen führt die Auswahl eines möglichen Ausgabeprodukts einer Maschine dazu, dass die Darstellung der Maschine und/oder die Darstellung des ausgewählten möglichen Ausgabeprodukts im zweiten Anzeigebereich 250 dargestellt wird. Im Beispiel der Figur 3, hat ein Benutzer ein mögliches Ausgabeprodukt der Maschine 120-1, die von der Darstellung 220-1 im ersten Anzeigebereich 200 repräsentiert wird, ausgewählt. Demzufolge hat eine Zuordnung des ausgewählten Ausgabeprodukts zum zweiten Anzeigebereich 250 stattgefunden. In einem Beispiel wird Darstellung 270-1 im zweiten Anzeigebereich 250 dargestellt, die Darstellung 220-1 entspricht und somit Maschine 120-1 repräsentiert. Des Weiteren wird im zweiten Anzeigebereich 250 das ausgewählte mögliche Ausgabeprodukt 280 dargestellt. Die Darstellung 280 entspricht demnach der ausgewählten Darstellung aus den Darstellungen 230-1, 230-2, 230-3, ..., 230-M.

Die Auswahl eines möglichen Ausgabeprodukts des ersten Anzeigebereichs 200 wird am Beispiel der Darstellung 230-3, die die Maschine 120-3 repräsentiert, noch einmal beschrieben. Der Benutzer wählt hier das mögliche Ausgabeprodukt 235-2 der Maschine 120-3 aus. Die Auswahl wird symbolisch durch den gestrichelten Pfeil 300 in Figur 3 dargestellt. Beispielsweise verschiebt der Benutzer die Darstellung 235-2 mittels Drag & Drop in den zweiten Anzeigebereich 250. Nach erfolgter Auswahl wird die Darstellung 235-2 dem zweiten Anzeigebereich 250 zugeordnet. In einer Ausführungsform führt das dazu, dass die Darstellung 285 im zweiten Anzeigebereich 250 erscheint und angezeigt wird. Die Darstellung 285 entspricht hierbei der ausgewählten Darstellung 235-2. In einigen Ausführungsformen wird außerdem noch die Darstellung 270-3 im zweiten Anzeigebereich 250 angezeigt, die der Darstellung 220-3 des ersten Anzeigebereichs 200 entspricht.

So kann durch einfaches Auswählen von möglichen Ausgabeprodukten im ersten Anzeigebereich 200 ein Programm zur Steuerung der Produktionsanlage 105 erstellt werden. Speziell ist die Steuerbefehleinheit 150 dazu eingerichtet, die ausgewählten Ausgabeprodukte, die dem zweiten Anzeigebereich 250 zugeordnet sind, in Steuerbefehle für die Produktionsanlage 105 umzuwandeln.

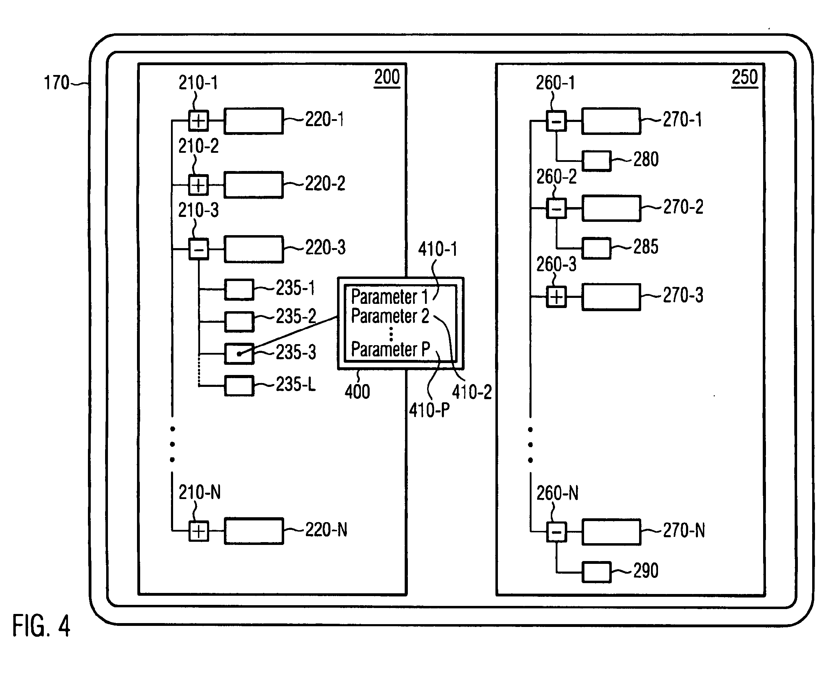

Figur 4 zeigt hierbei ein fertig erstelltes Steuerungsprogramm für die Produktionsanlage 105. Das Steuerprogramm wird dabei durch die Steuerbefehleinheit 150 der Steuervorrichtung 100 generiert, indem die Ausgabeprodukte, die dem zweiten Anzeigebereich 250 zugeordnet sind, in Steuerbefehle für die Maschinen 120-1, 120-2, 120-3, ..., 120-N der Produktionsanlage 105 umgewandelt werden.

In Ausführungsformen der Erfindung wird ein ausgewähltes Ausgabeprodukt in Steuerbefehle für die Maschine, die das ausgewählte Ausgabeprodukt erzeugt, umgewandelt. Da Ausgabeprodukte der Maschinen 120-1, 120-2, 120-3, ... 120-(N-1) die Eingabeprodukte der Maschinen 120-2, 120-3, ..., 120-N sind, wird in Ausführungsformen der Erfindung ein ausgewähltes Ausgabeprodukt in Steuerbefehle für die Maschine umgewandelt, die das ausgewählte Ausgabeprodukt erzeugt und zusätzlich in Steuerbefehle für mindestens eine weitere Maschine der Produktionsanlage. Demnach ist die Steuerbefehleinheit 150 eingerichtet, die übrigen Maschinen der Produktionsanlage derart zu steuern, dass sie Ausgabeprodukte der vorangegangenen Maschinen als Eingabeprodukte verwerten können. Dies macht ein mühsames Programmieren einer jeden Maschine überflüssig.

Wie im ersten Anzeigebereich 200, können auch im zweiten Anzeigebereich 250 die Darstellungen 270-1, 270-2, 270-3, ..., 270-N, die den Darstellungen 220-1, 220-2, 220-3, ..., 220-N des ersten Anzeigebereichs 200 entsprechen und die Maschinen 120-1, 120-2, 120-3, ..., 120-N repräsentieren, als Baumstruktur organisiert sein. Dabei können die ausgewählten Ausgabeprodukte 280, 285 und 290 ebenfalls als Pulldown-Menü realisiert sein, die minimiert werden können, um die Übersichtlichkeit zu erhöhen. So ist beispielsweise in der Figur 4 das ausgewählte Ausgabeprodukt der Maschine 120-3, das durch die Darstellung 270-3 repräsentiert wird, minimiert. Ein Benutzer hat über 260-3 Zugriff auf ein Pulldown-Menü, das das ausgewählte Ausgabeprodukt der Maschine 120-3 anzeigt. In manchen Ausführungsformen wird das zugeordnete Ausgabeprodukt angezeigt, wenn die entsprechende Darstellung 270-1, 270-2, 270-3,..., 270-N der Maschine im zweiten Anzeigebereich 250 ausgewählt wird.

In Figur 4 wird ein weiterer Aspekt der vorliegenden Erfindung dargestellt. In Ausführungsformen der vorliegenden Erfindung wird dynamisch ein weiterer Anzeigebereich 400 generiert, sobald ein Benutzer ein mögliches Ausgabeprodukt, das im ersten Anzeigebereich 200 dargestellt ist, oder ein ausgewähltes Ausgabeprodukt, das im zweiten Anzeigebereich 250 dargestellt ist, markiert. Eine Markierung kann hierbei durch längeres Berühren des möglichen/ausgewählten Ausgabeprodukts auf einem Touchscreen erfolgen oder durch Halten einer Maustaste. Das Markieren eines möglichen/ausgewählten Ausgabeprodukts wird beispielsweise durch die Markierungseinheit 180 zur Verfügung gestellt. Dabei kann die Steuervorrichtung 100 eindeutig unterscheiden, ob ein Benutzer ein mögliches Ausgabeprodukt des ersten Anzeigebereichs 200 markiert oder auswählt. Beispielsweise kann für Ausführungsformen mit Touchscreen-Anzeige eine Auswahl durch Verschieben mittels Drag & Drop einer Darstellung des möglichen Ausgabeprodukts in den zweiten Anzeigebereich 250 stattfinden, wohingegen eine Markierung durch längeres Berühren der Darstellung des möglichen Ausgabeprodukts auf dem Touchscreen ohne Verschieben der Darstellung erfolgt.

Das Ausgabeprodukt jeder Maschine 120-1, 120-2, 120-3, ..., 120-N der Produktionsanlage 105 kann über veränderbare Produkt- und/oder Rezeptparameter (auch einfach nur Parameter genannt) der jeweiligen Maschine verändert werden. Im Speicher 140 sind jedem möglichen Ausgabeprodukt jeder Maschine Parameter zugeordnet. Wird die Maschine mit den zugeordneten Parametern eines möglichen Ausgabeprodukts eingestellt, so hat die Maschine das mögliche Ausgabeprodukt als tatsächliches Ausgabeprodukt.

Im Anzeigebereich 400 werden Parameter 410-1, 410-2, ..., 410-P der Maschine angezeigt, die dem markierten möglichen Ausgabeprodukt zugeordnet sind und beispielsweise im Speicher 140 gespeichert sind. Auch die Parameter 410-1, 410-2, ..., 410-P können grafisch (mittels Bild oder Animation) und/oder beschreibend dargestellt werden. Diese Markierungsfunktion kann auch auf bereits ausgewählte Ausgabeprodukte im zweiten Anzeigebereich 250 angewandt werden. Im Beispiel der Produktionsanlage zum Portionieren von Lebensmitteln können beispielsweise Parameter für eine Schneidemaschine Scheiben pro Portion, Gewicht pro Wagentisch und Scheibendicke sein.

Die Steuervorrichtung 100 stellt des Weiteren eine Editiereinheit 190 zur Verfügung, die es dem Benutzer ermöglicht, die Parameter 410-1, 410-2, ..., 410-P zu ändern. Diese geänderten Parameter werden dann dem markierten möglichen/ausgewählten Ausgabeprodukt zugeordnet und im Speicher 140 abgelegt. Die Zuordnung der Parameter bleibt erhalten, wenn ein mögliches Ausgabeprodukt des ersten Anzeigebereichs 200 ausgewählt wird und dem zweiten Anzeigebereich 250 zugeordnet wird. Demnach hat ein ausgewähltes und dem zweiten Anzeigebereich 250 zugeordnetes Ausgabeprodukt die selben Parameter zugeordnet wie das mögliche Ausgabeprodukt des ersten Anzeigebereichs 200, das dem ausgewählten Ausgabeprodukt des zweiten Anzeigebereichs 250 entspricht und umgekehrt.

Die Steuerbefehleinheit 150 hat Zugriff auf die dem zweiten Anzeigebereich 250 zugeordneten und damit ausgewählten Ausgabeprodukte sowie auf den Speicher 140, in dem die Parameter, die den ausgewählten Ausgabeprodukten zugeordnet sind, gespeichert sind. Die Steuerbefehleinheit 150 erzeugt Steuerbefehle für die Produktionsanlage 105 in Abhängigkeit von den Parametern, die den ausgewählten und somit dem zweiten Anzeigebereich 250 zugeordneten Ausgabeprodukten zugeordnet sind. Ändert demnach ein Benutzer Parameter, die einem möglichen/ausgewählten Ausgabeprodukt zugeordnet sind, mittels der Editiereinheit 190, so ändern sich auch die von der Steuerbefehleinheit 150 generierten Steuerbefehle für die Produktionsanlage 105.

Die Ausgabeprodukte der Maschinen 120-1, 120-2, 120-3, ..., 120-(N-1) der Produktionsanlage 105 sind, wie bereits erwähnt, Eingabeprodukte der Maschinen 120-2, 120-3, ..., 120-N. Demnach erfordert eine Änderung des Ausgabeprodukts einer Maschine der Produktionsanlage in Ausführungsformen der Erfindung eine Anpassung von Parametern der folgenden Maschinen. In Ausführungsformen der Erfindung findet diese Anpassung der Parameter automatisch durch die Steuervorrichtung 100 statt.

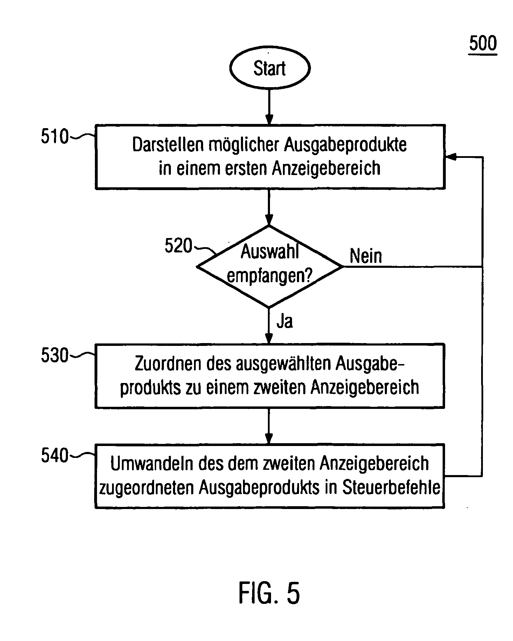

Figur 5 zeigt ein Verfahren, das von der Steuervorrichtung 100 zur Erstellung eines Programms zum Steuern der Produktionsanlage 105 durchgeführt wird. Die Produktionsanlage umfasst hierbei in einer Ausführungsform mindestens eine Schneidemaschine für Lebensmittel. Dabei liegt das Verfahren als computerausführbare Instruktionen auf einem computerlesbaren Speichermedium vor. Die computerausführbaren Instruktionen veranlassen dabei einen Computer, das Verfahren 500 auszuführen.

In einem Schritt 510 werden mögliche Ausgabeprodukte von Maschinen der Produktionsanlage 105 im ersten Anzeigebereich 200 einer Anzeige 170 der Steuervorrichtung 100 dargestellt. In Schritt 520 wird überprüft, ob ein Benutzer ein mögliches Ausgabeprodukt ausgewählt hat, das im ersten Anzeigebereich 200 dargestellt ist. Ist das nicht der Fall, so werden weiter im Schritt 510 die möglichen Ausgabeprodukte im ersten Anzeigebereich 200 dargestellt. Wählt ein Benutzer hingegen im Schritt 520 ein mögliches Ausgabeprodukt aus, das im ersten Anzeigebereich 200 dargestellt wird, so wird das ausgewählte Ausgabeprodukt im Schritt 530 dem zweiten Anzeigebereich 250 zugeordnet. In Ausführungsformen der Erfindung wird im Schritt 530 außerdem das ausgewählte Ausgabeprodukt im zweiten Anzeigebereich 250 dargestellt. Die Steuervorrichtung wandelt dann im Schritt 540 das Ausgabeprodukte, das dem zweiten Anzeigebereich 250 zugeordnet ist, in Steuerbefehle für die Produktionsanlage 105 um. In manchen Ausführungsformen wandelt die Steuervorrichtung 100 das dem zweiten Anzeigebereich 250 zugeordnete Ausgabeprodukt in Steuerbefehle für die Maschine um, dessen Ausgabeprodukt das dem zweiten Anzeigebereich 250 zugeordnete Ausgabeprodukt ist. In anderen Ausführungsformen wandelt die Steuervorrichtung 100 das dem zweiten Anzeigebereich 250 zugeordnete Ausgabeprodukt in Steuerbefehle für die Maschine um, dessen Ausgabeprodukt das dem zweiten Anzeigebereich zugeordnete Ausgabeprodukt ist, und in Steuerbefehle für mindestens eine weitere Maschine. Das Verfahren führt dann wieder den Schritt 510 aus und wird erneut durchlaufen.

Somit stellt die vorliegende Erfindung ein vereinfachtes Verfahren zum Programmieren einer Steuervorrichtung für eine Produktionsanlage 105 zum Portionieren von Lebensmitteln zur Verfügung. Eine Produktionsanlage 105 zum Portionieren von Lebensmitteln umfasst hierbei mindestens eine Schneidemaschine (Slicer). Die Schneidevorrichtung ist somit eine der Maschinen 120-1, 120-2, 120-3, ..., 120-N. Die Darstellungen 220-1, 220-2, 220-3,..., 220-N der Maschinen 120-1, 120-2, 120-3, ..., 120-N im ersten Anzeigebereich 200 geben in Ausführungsformen die Konfiguration der aktuellen Linie, d.h. der Produktionsanlage 105, wieder. Wird die aktuelle Linie um eine Maschine erweitert, so kann mittels einer Modulbibliothek die neue Konfiguration repräsentiert werden. Hierzu kann ein Benutzer aus der Modulbibliothek die neue Maschine in der Produktionsanlage auswählen und in den ersten Anzeigebereich 200 einfügen. Mögliche Ausgabeprodukte der neuen Maschine werden ebenfalls von der Modulbibliothek zur Verfügung gestellt sowie eventuell erforderliche Anpassungen der Steuerung der übrigen Maschinen in der Produktionsanlage 105.

Die Programmierung der gesamten Produktionsanlage 105 findet durch Auswahl möglicher Ausgabeprodukte der im ersten Anzeigebereich 250 dargestellten Maschinen statt. Dabei generiert die Steuervorrichtung 100 automatisch Steuerbefehle aus den ausgewählten Ausgabeprodukten. In einigen Ausführungsformen der vorliegenden Erfindung ist die Steuervorrichtung 100 außerdem eingerichtet, eine Plausibilitätskontrolle durchzuführen, ob die ausgewählten Ausgabeprodukte, die dem zweiten Anzeigebereich 250 zugeordnet sind, zueinander kompatibel sind. Dafür verfügt die Steuervorrichtung 100 über die Kontrollfunktion 155, die beispielsweise in der Steuerbefehleinheit 150 angesiedelt ist. Sind die Ausgabeprodukte, die dem zweiten Anzeigebereich 250 zugeordnet sind, nicht zueinander kompatibel, so schlägt in Ausführungsform der Erfindung die Steuervorrichtung 100 alternative Ausgabeprodukte vor, die der Benutzer dann auswählen kann.

Des Weiteren unterstützt die vorliegende Erfindung Benutzergruppen. Hier erstellt beispielsweise ein Benutzer unter einem eindeutigen Benutzerkonto verschiedene Steuerprogramme für die Produktionsanlage 105 und speichert diese auf der Steuervorrichtung 100. Identifiziert sich ein Benutzer später eindeutig gegenüber der Steuervorrichtung 100, so hat er/sie Zugriff auf die von ihm/ihr unter dem Benutzerkonto generierten Steuerprogramme für die Produktionsanlage. Anschließend kann er/sie eine gespeichertes Steuerprogramm auswählen und so schnell die Produktionsanlage für ein anderes Endprodukt umprogrammieren.

So vereinfacht die vorliegende Erfindung das Programmieren einer Produktionsanlage, die aus mehreren Maschinen besteht. Ein Benutzer wählt grafische Darstellungen gewünschter Ausgabeprodukte aus und die Steuervorrichtung der Erfindung erstellt daraus automatisch ein Steuerprogramm für die gesamte Produktionsanlage. So werden Fehleingaben verhindert, was zu einer erheblichen Zeitersparnis bei der Inbetriebnahme oder Umrüstung einer Produktionsanlage führt. Des Weiteren stellt die Erfindung ein Mittel zu Verfügung, das es auf einfache Art und Weise erlaubt, die Konfiguration einer Produktionsanlage im Steuerprogramm zu ändern.

## Patentansprüche

1. Produktionsanlage (105) zum Portionieren von Lebensmitteln, wobei die Produktionsanlage mindestens eine Schneidemaschine für Lebensmittel und eine weitere Maschine umfasst, umfassend:
eine Anzeigevorrichtung (170) umfassend einen ersten Anzeigebereich (200) und einen zweiten Anzeigebereich (250), wobei die Anzeigevorrichtung eingerichtet ist, im ersten Anzeigebereich mögliche Ausgabeprodukte der Schneidemaschine und mögliche Ausgabeprodukte der weiteren Maschine darzustellen;
eine Auswahleinheit (160) mittels der ein Benutzer ein Ausgabeprodukt aus möglichen Ausgabeprodukten der Schneidemaschine, die im ersten Anzeigebereich dargestellt sind, auswählen kann und mittels der der Benutzer ein Ausgabeprodukt aus möglichen Ausgabeprodukten der weiteren Maschine, die im ersten Anzeigebereich dargestellt sind, auswählen kann, wobei die Auswahleinheit eingerichtet ist, ein vom Benutzer ausgewähltes Ausgabeprodukt des ersten Anzeigebereichs dem zweiten Anzeigebereich zuzuordnen;
eine Steuerbefehleinheit (150), die eingerichtet ist, ein Ausgabeprodukt der Schneidemaschine, das dem zweiten Anzeigebereich zugeordnet ist, in Steuerbefehle für die Schneidemaschine umzuwandeln und ein Ausgabeprodukt der weiteren Maschine, das dem zweiten Bereich zugeordnet ist, in Steuerbefehle für die weitere Maschine umzuwandeln.

2. Produktionsanlage nach Anspruch 1, wobei die Anzeigevorrichtung des Weiteren eingerichtet ist, in den ersten und zweiten Anzeigebereichen die Schneidemaschine und die weitere Maschine darzustellen und der Benutzer mittels der Auswahleinheit die Schneidemaschine und die weitere Maschine, die im ersten Bereich dargestellt sind, auswählen kann, wobei die Anzeigevorrichtung des Weiteren eingerichtet ist:
mögliche Ausgabeprodukte der Schneidemaschine im ersten Anzeigebereich darzustellen, wenn der Benutzer die Schneidemaschine auswählt,
mögliche Ausgabeprodukte der weiteren Maschine im ersten Anzeigebereich darzustellen, wenn der Benutzer die weitere Maschine auswählt,
die Schneidemaschine im zweiten Anzeigebereich darzustellen, wenn der Benutzer ein Ausgabeprodukt der Schneidemaschine im ersten Bereich auswählt, und
die weitere Maschine im zweiten Anzeigebereich darzustellen, wenn der Benutzer ein Ausgabeprodukt der weiteren Maschine im ersten Anzeigebereich auswählt.

3. Produktionsanlage nach einem der Ansprüche 1 bis 2, wobei die möglichen Ausgabeprodukte des ersten Anzeigebereichs grafisch dargestellt sind und in den zweiten Anzeigebereich mittels Drag & Drop verschiebbar sind, und wobei der Benutzer ein Ausgabeprodukt aus den möglichen Ausgabeprodukten des ersten Anzeigebereichs auswählt, indem der Benutzer das Ausgabeprodukt mittels Drag & Drop in den zweiten Anzeigebereich verschiebt; und/oder
wobei die Anzeigevorrichtung als Touchscreen ausgebildet ist.

4. Produktionsanlage nach einem der Ansprüche 1 bis 3, wobei der Benutzer ein Ausgabeprodukt der Schneidemaschine und ein Ausgabeprodukt der weiteren Maschine ausgewählt hat und wobei die Steuereinheit des Weiteren eingerichtet ist zum Durchführen einer Kontrollfunktion, wobei die Kontrollfunktion überprüft, ob die ausgewählten Ausgabeprodukte kompatibel zueinander sind; und/oder
wobei die Steuereinheit des Weiteren eingerichtet ist, ein dem zweiten Anzeigebereich zugeordnetes Ausgabeprodukt der Schneidemaschine in Steuerbefehle für die Schneidemaschine und die weitere Maschine umzuwandeln, und/oder ein dem zweiten Anzeigebereich zugeordnetes Ausgabeprodukt der weiteren Maschine in Steuerbefehle für die weitere Maschine und die Schneidemaschine umzuwandeln.

5. Produktionsanlage nach einem der Ansprüche 1 bis 4, wobei die Anzeigevorrichtung des Weiteren eingerichtet ist, dem zweiten Anzeigebereich zugeordnete Ausgabeprodukte der Schneidemaschine und der weiteren Maschine im zweiten Anzeigebereich darzustellen.

6. Produktionsanlage nach Anspruch 5, des Weiteren eine Markierungseinheit umfassend mittels der der Benutzer ein Ausgabeprodukt, das im ersten oder zweiten Anzeigebereich dargestellt ist, markieren kann, wobei jedem Ausgabeprodukt Parameter der Produktionsanlage zugeordnet sind, und wobei die Anzeigevorrichtung des Weiteren eingerichtet ist dynamisch einen dritten Anzeigebereich zu generieren, wenn ein Benutzer ein mögliches Ausgabeprodukt im ersten oder zweiten Anzeigebereich mittels der Markierungseinheit markiert, und die Parameter der Produktionsanlage, die dem markierten Ausgabeprodukt zugeordnet sind, im dritten Anzeigebereich darzustellen.

7. Produktionsanlage nach Anspruch 6, des Weiteren eine Editiereinheit umfassend mittels der der Benutzer Parameter, die einem Ausgabeprodukt zugeordnet sind und im dritten Anzeigebereich dargestellt sind, ändern kann, wobei die Steuerbefehle, in die ein erstes Ausgabeprodukt umgewandelt werden, sich von den Steuerbefehlen, in die ein zweites Ausgabeprodukt umgewandelt werden, unterscheiden, wenn dem ersten Ausgabeprodukt Parameter zugeordnet sind, die sich von den Parametern unterscheiden, die dem zweiten Ausgabeprodukt zugeordnet sind.

8. Vorrichtung (100) zum Steuern einer Produktionsanlage (105), die eine erste und eine zweite Maschine umfasst, umfassend:
eine Anzeigevorrichtung (170) umfassend einen ersten Anzeigebereich (200) und einen zweiten Anzeigebereich (250), wobei die Anzeigevorrichtung eingerichtet ist, im ersten Anzeigebereich mögliche Ausgabeprodukte der ersten und mögliche Ausgabeprodukte der zweiten Maschine darzustellen;
eine Auswahleinheit (160) mittels der ein Benutzer ein Ausgabeprodukt aus möglichen Ausgabeprodukten der ersten Maschine, die im ersten Anzeigebereich dargestellt sind, auswählen kann und mittels der der Benutzer ein Ausgabeprodukt aus möglichen Ausgabeprodukten der zweiten Maschine, die im ersten Anzeigebereich dargestellt sind, auswählen kann, wobei die Auswahleinheit eingerichtet ist, ein vom Benutzer ausgewähltes Ausgabeprodukt des ersten Anzeigebereichs dem zweiten Anzeigebereich zuzuordnen; und
eine Steuerbefehleinheit (150), die eingerichtet ist, ein Ausgabeprodukt der ersten Maschine, das dem zweiten Anzeigebereich zugeordnet ist, in Steuerbefehle für die erste Maschine umzuwandeln und ein Ausgabeprodukt der zweiten Maschine, das dem zweiten Bereich zugeordnet ist, in Steuerbefehle für die zweite Maschine umzuwandeln.

9. Vorrichtung nach Anspruch 8, wobei die Vorrichtung zum Steuern die Produktionsanlage umfasst, wobei die Produktionsanlage eine Produktionsanlage nach einem der Ansprüche 1 bis 7 ist und wobei die erste Maschine die Schneidemaschine und die zweite Maschine die weitere Maschine ist.

10. Computerlesbares Speichermedium, das computerausführbare Instruktionen enthält, die, wenn von einem Computer ausgeführt, den Computer veranlassen ein Verfahren zum Steuern einer Produktionsanlage zum Portionieren von Lebensmitteln auszuführen, wobei die Produktionsanlage mindestens eine Schneidemaschine und eine weitere Maschine umfasst und wobei das Verfahren folgende Schritte umfasst:
Darstellen (510) möglicher Ausgabeprodukte der Schneidemaschine in einem ersten Anzeigebereich (200) einer Anzeigevorrichtung (170);
Darstellen möglicher Ausgabeprodukte der weiteren Maschine im ersten Anzeigebereich der Anzeigevorrichtung;
Empfangen einer Auswahl eines Ausgabeprodukts aus den möglichen Ausgabeprodukten der Schneidemaschine durch einen Benutzer;
Empfangen einer Auswahl eines Ausgabeprodukts aus den möglichen Ausgabeprodukten der weiteren Maschine durch den Benutzer;
Zuordnen (530) des ausgewählten Ausgabeprodukts der Schneidemaschine zu einem zweiten Anzeigebereich (250) der Anzeigevorrichtung;
Zuordnen des ausgewählten Ausgabeprodukts der weiteren Maschine zum zweiten Anzeigebereich der Anzeigevorrichtung; und
Umwandeln (540) des dem zweiten Anzeigebereich zugeordneten Ausgabeprodukts der Schneidemaschine in Steuerbefehle für die Schneidemaschine und Umwandeln des dem zweiten Anzeigebereich zugeordneten Ausgabeprodukts der weiteren Maschine in Steuerbefehle für die weitere Maschine.

11. Computerlesbares Speichermedium nach Anspruch 10, wobei das Empfangen einer Auswahl das Verschieben des möglichen Ausgabeprodukts vom ersten Anzeigebereich in den zweiten Anzeigebereich mittels Drag & Drop umfasst.

12. Computerlesbares Speichermedium nach Anspruch 10 oder 11, wobei das Verfahren des Weiteren umfasst:
Umwandeln des dem zweiten Anzeigebereich zugeordneten Ausgabeprodukts der Schneidemaschine in Steuerbefehle für die weitere Maschine; und
Umwandeln des dem zweiten Anzeigebereichs zugeordneten Ausgabeprodukts der weiteren Maschine in Steuerbefehle für die Schneidemaschine; und/oder
Darstellen der dem zweiten Anzeigebereich zugeordneten Ausgabeprodukte der Schneidemaschine und der weiteren Maschine im zweiten Anzeigebereich.

13. Computerlesbares Speichermedium nach Anspruch 12, wobei jedem Ausgabeprodukt, das im ersten oder zweiten Anzeigebereich dargestellt ist, Parameter der Produktionsanlage zugeordnet sind und wobei das Verfahren des Weiteren umfasst:
Markieren eines Ausgabeprodukts, das im ersten oder zweiten Anzeigebereich dargestellt ist, durch den Benutzer;
Generieren eines dritten Anzeigebereichs in der Anzeigevorrichtung in Antwort auf das Markieren des Ausgabeprodukts und Darstellen der Parameter der Produktionsanlage, die dem markierten Ausgabeprodukt zugeordnet sind, im dritten Anzeigebereich.

14. Computerlesbares Speichermedium nach Anspruch 13, wobei die Steuerbefehle, in die ein erstes Ausgabeprodukt umgewandelt werden, sich von den Steuerbefehlen, in die ein zweites Ausgabeprodukt umgewandelt werden, unterscheiden, wenn dem ersten Ausgabeprodukt Parameter zugeordnet sind, die sich von den Parametern unterscheiden, die dem zweiten Ausgabeprodukt zugeordnet sind und wobei das Verfahren des Weiteren umfasst:
Ändern der Parameter, die einem Ausgabeprodukt zugeordnet sind und im dritten Anzeigebereich dargestellt sind, durch den Benutzer.

## Claims

1. A production plant (105) for portioning food, wherein the production plant comprises at least one cutting machine for food and a further machine, comprising:
a display device (170) comprising a first display region (200) and a second display region (250), the display device being adapted to display possible output products of the cutting machine and possible output products of the further machine in the first display region;
a selection unit (106) by means of which a user can select an output product from possible output products of the cutting machine which are displayed in the first display region, and by means of which the user can select an output product from possible output products of the further machine which are displayed in the first display region, the selection unit being adapted to allocate an output product selected by the user from the first display region to the second display region;
a control command unit (150) adapted to convert an output product of the cutting machine which is allocated to the second display region into control commands for the cutting machine, and to convert an output product of the further machine which is allocated to the second region into control commands for the further machine.

2. The production plant of claim 1, wherein the display device is further adapted to display the cutting machine and the further machine in the first and second display regions, and the user is enabled to select, by means of the selection unit, the cutting machine and the further machine which are displayed in the first region, the display device being further adapted to:
display possible output products of the cutting machine in the first display region when the user selects the cutting machine,
display possible output products of the further machine in the first display region when the user selects the further machine,
display the cutting machine in the second display region when the user selects an output product of the cutting machine in the first region, and
display the further machine in the second display region when the user selects an output product of the further machine in the first display region.

3. The production plant of any one of claims 1 to 2, wherein the possible output products of the first display region are represented graphically and can be shifted into the second display region by means of drag & drop, and wherein the user selects an output product from the possible output products of the first display region by the user shifting the output product into the second display region by means of drag & drop, and/or
wherein the display device is embodied as a touch screen.

4. The production plant of any one of claims 1 to 3, wherein the user has selected an output product of the cutting machine and an output product of the further machine, and wherein the control unit is further adapted to perform a control function, the control function checking whether the selected output products are compatible with each other, and/or
wherein the control unit is further adapted to convert an output product of the cutting machine allocated to the second display region into control commands for the cutting machine and the further machine, and/or to convert an output product of the further machine allocated to the second display region into control commands for the further machine and the cutting machine.

5. The production plant of any one of claims 1 to 4, wherein the display device is further adapted to display output products of the cutting machine and of the further machine allocated to the second display region in the second display region.

6. The production plant of claim 5, further comprising a marking unit by means of which the user can mark an output product displayed in the first or second display region, wherein parameters of the production plant are allocated to each output product, and wherein the display device is further adapted to dynamically generate a third display region when a user marks a possible output product in the first or in the second display region by means of the marking unit, and to display the parameters of the production plant allocated to the marked output product in the third display region.

7. The production plant of claim 6, further comprising an edit unit by means of which the user can change parameters allocated to an output product and displayed in the third display region, wherein the control commands into which a first output product is converted differ from the control commands into which a second output product is converted when parameters allocated to the first output product differ from the parameters allocated to the second output product.

8. A device (100) for controlling a production plant (105) comprising a first and a second machine, comprising:
a display device (170) comprising a first display region (200) and a second display region (250), the display device being adapted to display possible output products of the first and possible output products of the second machine in the first display region;
a selection unit (106) by means of which a user can select an output product from possible output products of the first machine which are displayed in the first display region, and by means of which the user can select an output product from possible output products of the second machine which are displayed in the first display region, the selection unit being adapted to allocate an output product selected by the user from the first display region to the second display region; and
a control command unit (150) adapted to convert an output product of the first machine which is allocated to the second display region into control commands for the first machine and to convert an output product of the second machine which is allocated to the second region into control commands for the second machine.

9. The device of claim 8, wherein the device for controlling comprises the production plant, wherein the production plant is a production plant of any one of claims 1 to 7, and wherein the first machine is the cutting machine and the second machine is the further machine.

10. A computer-readable storage medium comprising computer-executable instructions that, when executed by a computer, prompt the computer to perform a method for controlling a production plant for portioning food, wherein the production plant comprises at least one cutting machine and a further machine, and wherein the method comprises the following steps:
displaying (510) possible output products of the cutting machine in a first display region (200) of a display device (170);
displaying possible output products of the further machine in the first display region of the display device;
receiving a selection of an output product from the possible output products of the cutting machine by a user;
receiving a selection of an output product from the possible output products of the further machine by the user;
allocating (530) the selected output product of the cutting machine to a second display region (250) of the display device;
allocating the selected output product of the further machine to the second display region of the display device; and
converting (540) the output product of the cutting machine allocated to the second display region into control commands for the cutting machine and converting the output product of the further machine allocated to the second display region into control commands for the further machine.

11. The computer-readable storage medium of claim 10, wherein receiving a selection comprises shifting the possible output product from the first display region into the second display region by means of drag & drop.

12. The computer-readable storage medium of claim 10 or 11, wherein the method further comprises:
converting the output product of the cutting machine allocated to the second display region into control commands for the further machine; and
converting the output product of the further machine allocated to the second display region into control commands for the cutting machine; and/or
displaying the output products of the cutting machine and of the further machine allocated to the second display region in the second display region.

13. The computer-readable storage medium of claim 12, wherein parameters of the production plant are allocated to each output product displayed in the first or the second display region, and wherein the method further comprises:
marking an output product displayed in the first or second display region by the user;
generating a third display region in the display device in response to the marking of the output product and displaying the parameters of the production plant allocated to the marked output product in the third display region.

14. The computer-readable storage medium of claim 13, wherein the control commands into which a first output product is converted differ from the control commands into which a second output product is converted when parameters allocated to the first output product differ from the parameters allocated to the second output product, and wherein the method further comprises:
changing the parameters allocated to an output product and displayed in the third display region by the user.

## Revendications

1. Installation de production (105) pour la mise en portions de produits alimentaires, l'installation de production comprenant au moins une machine de coupe pour produits alimentaires et une autre machine, et l'installation comportant :
un dispositif de visualisation (170) comprenant une première zone de visualisation (200) et une deuxième zone de visualisation (250), le dispositif de visualisation étant conçu pour représenter dans la première zone de visualisation de possibles produits de sortie de la machine de coupe et de possibles produits de sortie de ladite autre machine ;
une unité de sélection (160) à l'aide de laquelle un utilisateur peut sélectionner un produit de sortie parmi de possibles produits de sortie de la machine de coupe, qui sont représentés dans la première zone de visualisation, et à l'aide de laquelle l'utilisateur peut sélectionner un produit de sortie parmi de possibles produits de sortie de ladite autre machine, qui sont représentés dans la première zone de visualisation, l'unité de sélection étant conçue pour affecter un produit de sortie de la première zone de visualisation, sélectionné par l'utilisateur, à la deuxième zone de visualisation ;
une unité d'ordres de commande (150), qui est conçue pour convertir un produit de sortie de la machine de coupe, qui est affecté à la deuxième zone de visualisation, en ordres de commande pour la machine de coupe, et pour convertir un produit de sortie de ladite autre machine, qui est affecté à la deuxième zone, en ordres de commande pour ladite autre machine.

2. Installation de production selon la revendication 1, dans laquelle le dispositif de visualisation est par ailleurs conçu pour représenter dans la première et la deuxième zone de visualisation, la machine de coupe et ladite autre machine, et dans laquelle l'utilisateur peut, au moyen de l'unité de sélection, sélectionner la machine de coupe et ladite autre machine, qui sont représentées dans la première zone, le dispositif de visualisation étant par ailleurs conçu pour :
représenter de possibles produits de sortie de la machine de coupe dans la première zone de visualisation, lorsque l'utilisateur sélectionne la machine de coupe,
représenter de possibles produits de sortie de ladite autre machine dans la première zone de visualisation, lorsque l'utilisateur sélectionne ladite autre machine, représenter la machine de coupe dans la deuxième zone de visualisation, lorsque l'utilisateur sélectionne un produit de sortie de la machine de coupe dans la première zone, et
représenter ladite autre machine dans la deuxième zone de visualisation, lorsque l'utilisateur sélectionne un produit de sortie de ladite autre machine dans la première zone de visualisation.

3. Installation de production selon l'une des revendications 1 à 2, dans laquelle les possibles produits de sortie de la première zone de visualisation sont représentés de manière graphique et peuvent être déplacés dans la deuxième zone de visualisation en mode "glisser-déposer", et dans laquelle l'utilisateur sélectionne un produit de sortie parmi les possibles produits de sortie de la première zone de visualisation, grâce au fait que l'utilisateur déplace le produit de sortie dans la deuxième zone de visualisation en mode "glisser-déposer" ; et/ou
dans laquelle le dispositif de visualisation est un écran tactile.

4. Installation de production selon l'une des revendications 1 à 3, dans laquelle l'utilisateur a sélectionné un produit de sortie de la machine de coupe et un produit de sortie de ladite autre machine, et dans laquelle l'unité de commande est par ailleurs conçue pour effectuer une fonction de contrôle, cette fonction de contrôle vérifiant que les produits de sortie sélectionnés sont compatibles les uns avec les autres ; et/ou
dans laquelle l'unité de commande est par ailleurs conçue pour convertir un produit de sortie de la machine de coupe affecté à la deuxième zone de visualisation, en ordres de commande pour la machine de coupe et ladite autre machine, et/ou pour convertir un produit de sortie de ladite autre machine affecté à la deuxième zone de visualisation, en ordres de commande pour ladite autre machine et la machine de coupe.

5. Installation de production selon l'une des revendications 1 à 4, dans laquelle le dispositif de visualisation est par ailleurs conçu pour représenter dans la deuxième zone de visualisation, des produits de sortie de la machine de coupe et de ladite autre machine affectés à la deuxième zone de visualisation.

6. Installation de production selon la revendication 5, qui comprend par ailleurs une unité de marquage au moyen de laquelle l'utilisateur peut marquer un produit de sortie, qui est représenté dans la première ou la deuxième zone de visualisation, installation dans laquelle à chaque produit de sortie sont associés des paramètres de l'installation de production, et dans laquelle le dispositif de visualisation est par ailleurs conçu pour générer de manière dynamique, une troisième zone de visualisation lorsqu'un utilisateur marque un possible produit de sortie dans la première ou la deuxième zone de visualisation au moyen de l'unité de marquage, et pour représenter dans la troisième zone de visualisation, les paramètres de l'installation de production, qui sont associés au produit de sortie marqué.

7. Installation de production selon la revendication 6, qui comprend par ailleurs une unité d'édition au moyen de laquelle l'utilisateur peut modifier des paramètres, qui sont associés à un produit de sortie et sont représentés dans la troisième zone de visualisation, installation dans laquelle les ordres de commande, en lesquels est converti un premier produit de sortie, se différencient des ordres de commande en lesquels est converti un deuxième produit de sortie, lorsqu'au premier produit de sortie sont associés des paramètres, qui se différencient des paramètres associés au deuxième produit de sortie.

8. Dispositif (100) pour assurer la commande d'une installation de production (105) comprenant une première et une deuxième machine, ledit dispositif comportant :
un dispositif de visualisation (170) comprenant une première zone de visualisation (200) et une deuxième zone de visualisation (250), le dispositif de visualisation étant conçu pour représenter dans la première zone de visualisation de possibles produits de sortie de la première machine et de possibles produits de sortie de la deuxième machine ;
une unité de sélection (160) à l'aide de laquelle un utilisateur peut sélectionner un produit de sortie parmi de possibles produits de sortie de la première machine, qui sont représentés dans la première zone de visualisation, et à l'aide de laquelle l'utilisateur peut sélectionner un produit de sortie parmi de possibles produits de sortie de la deuxième machine, qui sont représentés dans la première zone de visualisation, l'unité de sélection étant conçue pour affecter un produit de sortie de la première zone de visualisation, sélectionné par l'utilisateur, à la deuxième zone de visualisation ; et
une unité d'ordres de commande (150), qui est conçue pour convertir un produit de sortie de la première machine, qui est affecté à la deuxième zone de visualisation, en ordres de commande pour la première machine, et pour convertir un produit de sortie de la deuxième machine, qui est affecté à la deuxième zone, en ordres de commande pour la deuxième machine.

9. Dispositif selon la revendication 8, dans lequel le dispositif pour assurer la commande comprend l'installation de production, dans lequel l'installation de production est une installation de production selon l'une des revendications 1 à 7, et dans lequel la première machine est la machine de coupe et la deuxième machine est ladite autre machine.

10. Support de stockage ou de mémorisation pouvant être lu par ordinateur, contenant des instructions pouvant être exécutées par ordinateur, qui, lorsqu'elles sont exécutées par un ordinateur, enjoignent à l'ordinateur d'exécuter un procédé pour commander une installation de production pour la mise en portions de produits alimentaires, l'installation de production comprenant au moins une machine de coupe et une autre machine, et le procédé comprenant les étapes suivantes :
représentation (510) de possibles produits de sortie de la machine de coupe dans une première zone de visualisation (200) d'un dispositif de visualisation (170) ;
représentation de possibles produits de sortie de ladite autre machine dans la première zone de visualisation du dispositif de visualisation ;
réception d'une sélection d'un produit de sortie parmi les possibles produits de sortie de la machine de coupe par un utilisateur ;
réception d'une sélection d'un produit de sortie parmi les possibles produits de sortie de ladite autre machine par l'utilisateur ;
affectation (530) du produit de sortie de la machine de coupe, sélectionné, à une deuxième zone de visualisation (250) du dispositif de visualisation ;
affectation du produit de sortie de ladite autre machine, sélectionné, à la deuxième zone de visualisation du dispositif de visualisation ; et
conversion (540) du produit de sortie de la machine de coupe, affecté à la deuxième zone de visualisation, en ordres de commande pour la machine de coupe, et conversion du produit de sortie de ladite autre machine, affecté à la deuxième zone de visualisation, en ordres de commande pour ladite autre machine.

11. Support de stockage ou de mémorisation pouvant être lu par ordinateur, selon la revendication 10, dans lequel la réception d'une sélection englobe le déplacement du possible produit de sortie de la première zone de visualisation à la deuxième zone de visualisation au moyen d'un mode "glisser-déposer".

12. Support de stockage ou de mémorisation pouvant être lu par ordinateur, selon la revendication 10 ou la revendication 11, dans lequel le procédé comprend par ailleurs :
la conversion du produit de sortie de la machine de coupe, affecté à la deuxième zone de visualisation, en ordres de commande pour ladite autre machine ; et
la conversion du produit de sortie de ladite autre machine, affecté à la deuxième zone de visualisation, en ordres de commande pour la machine de coupe ; et/ou la représentation dans la deuxième zone de visualisation, des produits de sortie de la machine de coupe et de ladite autre machine, qui sont affectés à la deuxième zone de visualisation.

13. Support de stockage ou de mémorisation pouvant être lu par ordinateur, selon la revendication 12, dans lequel à chaque produit de sortie, qui est représenté dans la première ou la deuxième zone de visualisation, sont affectés des paramètres de l'installation de production, le procédé comprenant par ailleurs :
le marquage d'un produit de sortie, qui est représenté dans la première ou la deuxième zone de visualisation, par l'utilisateur ;
la production d'une troisième zone de visualisation dans le dispositif de visualisation en réponse au marquage du produit de sortie, et la représentation dans la troisième zone de visualisation, des paramètres de l'installation de production, qui sont associés au produit de sortie marqués.

14. Support de stockage ou de mémorisation pouvant être lu par ordinateur, selon la revendication 13, dans lequel les ordres de commande en lesquels est converti le premier produit de sortie, se différencient des ordres de commande en lesquels est converti un deuxième produit de sortie, lorsqu'au premier produit de sortie sont affectés des paramètres qui sont différents des paramètres affectés au deuxième produit de sortie, le procédé comprenant par ailleurs :
la modification, par l'utilisateur, des paramètres qui sont affectés à un produit de sortie et sont représentés dans la troisième zone de visualisation.
